# EUROPEAN PATENT APPLICATION

(11) **EP 2 520 905 A2**
(43) Date of publication of application: **07.11.2012**
(21) Application number: 12166873.5
(22) Date of filing: 04.05.2012
(51) Int. Cl.: G01D 4/00

(54) **Calculation of auxiliary value based on meter data from non-smart electronic utility meter**

(30) Priority: 05.05.2011 US 201113101275
(71) Applicant: General Electric Company, Schenectady, NY 12345 (US)
(72) Inventor: Sfaelos, Jimmy, Atlanta, GA Georgia 30339 (US)
(74) Representative: Cleary, Fidelma

(57) **Abstract**

A system (102,202), including a meter data support system (105,205) on a computer device (114) configured to: receive raw meter data from a plurality of non-smart electronic utility meters (104a-c) that are each restricted to one way outbound communication, calculate an auxiliary value for each non-smart electronic utility meter using the raw meter (104a-c) data from each respective non-smart electronic utility meter (104a-c), and provide access to the auxiliary value to at least one of a user (106) and a customer.

## Description

### BACKGROUND OF THE INVENTION

This invention relates generally to electronic utility meters and more particularly to calculation of an auxiliary value based on meter data from a non-smart electronic utility meter.

Residential and commercial customers may receive a utility from a utility distribution network. In an electrical distribution network, for example, residential and commercial customers may be connected via secondary phase distribution lines with a secondary step-down transformer, the secondary step-down transformer receiving power from primary phase distribution lines. An electronic utility meter meters the utility usage of the residential or commercial customer. Electrical distribution network may also include, for example, a generating station, a generator step-up transformer, high voltage transmission lines, and substation step-down transformers.

In recent years, electronic utility meters have become smart meters and may be equipped with three broad categories of components. First, an analog front end (AFE) for the purpose of metering utility usage. Second, a computer device that stores, processes, and calculates an auxiliary value based on the utility meter data at the meter. Third, equipment for two-way communication with a head end server within an advanced metering infrastructure (AMI) and/or with appliances within a home appliance network (HAN) of a customer. In order for the smart meter to do this, the electronic utility meter requires additional hardware such as processors, memory, integrated chips, printed circuit boards, and larger power supplies thereby increasing, for example, cost, power consumption, complexity, and weight of the electronic utility meter.

The AMI may include a head end server - a computer device that may include a software application that manages the timely collection, initial validation, and storage of data received from smart electronic utility meters.

### SUMMARY OF THE INVENTION

In a first aspect, the invention resides in a system, comprising: a meter data support system on a computer device configured to: receive raw meter data from a plurality of non-smart electronic utility meters that are each restricted to one way outbound communication, calculate an auxiliary value for each non-smart electronic utility meter using the raw meter data from each respective non-smart electronic utility meter, and provide access to the auxiliary value to at least one of a user and a customer.

The system, may also comprise a plurality of non-smart electronic utility meters, wherein each non-smart electronic utility meter is devoid of smart meter functioning with respect to calculating an auxiliary value, and wherein each non-smart electronic utility meter is restricted to one way outbound communication.

### BRIEF DESCRIPTION OF THE DRAWINGS

Embodiments of the present invention will now be described, by way of example only, with reference to the accompanying drawings in which:
FIG. 1 shows a block diagram of one embodiment of a system in accordance with the invention.
FIG. 2 shows a block diagram of one embodiment of a non-smart electronic utility meter in accordance with the invention.
FIG. 3 shows a block diagram of one embodiment of a system in accordance with the invention.
FIG. 4 shows a block diagram depicting a system in accordance with one embodiment of the invention.
FIG. 5 shows a flow diagram representing an embodiment of a method of calculation for non-smart electronic utility meters.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION

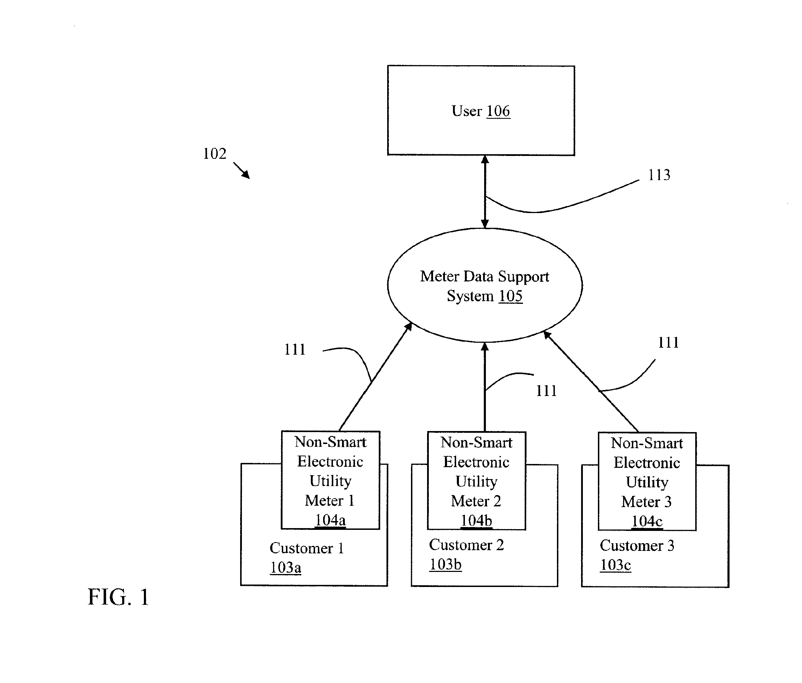

Referring to FIG.1, a schematic view of one embodiment of a system 102 in accordance with the invention is shown. As more fully described herein, system 102 reduces the computing and communication requirements of electronic utility meters allowing use of non-smart electronic utility meters ("non-smart meters") 104a-c. A plurality of non-smart meters 104a-c is shown in one-way outbound communication using a first communication signal 111 with meter data support system 105. Each non-smart meter 104a-c is associated with one of a plurality of customers 103a-c. Plurality of customers 103a-c may include residential and/or commercial customers. Each non-smart meter 104 may meter the utility usage of one of the plurality of customers 103a-c. Meter data support system 105 is shown in two-way communication using a second communication signal 113 with a user 106.

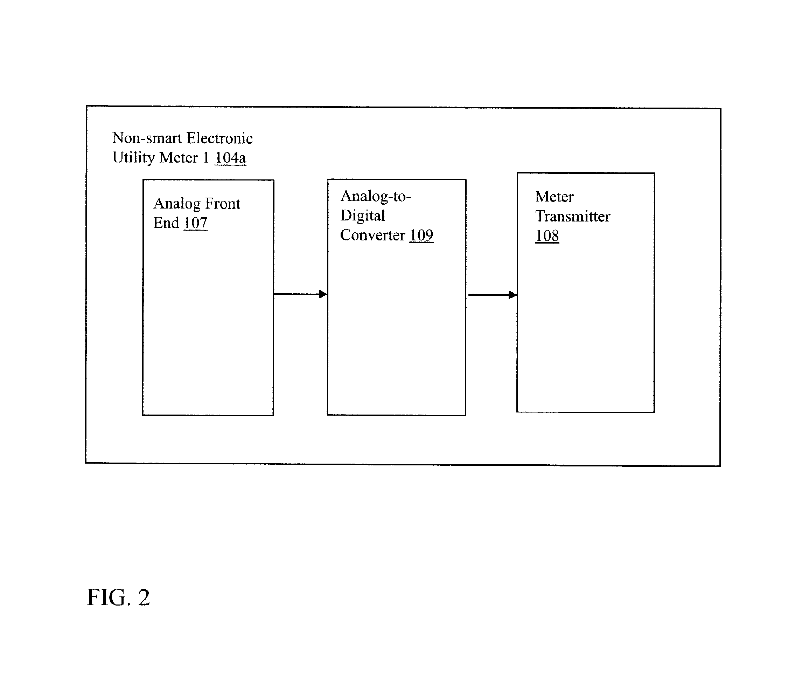

Referring to FIG. 2, a schematic view of one embodiment of non-smart meter 104a in accordance with the invention is shown. Non-smart meter 104a may include an analog front end (AFE) 107 and a meter transmitter 108. AFE 107 may meter utility usage and may be restricted to measuring the amount of a utility used, for example in the case of electricity - measuring kilowatt hours. In other words, the non-smart electronic utility meter is devoid of structure and functionality to calculate an auxiliary value using raw meter data. "Raw meter data" may include direct measurements of values, for example, kilowatts used, time, date, battery status, and meter number. For example, raw meter data may include, a kilowatt usage measured (by AFE 107), a date, a time, a meter number, and a battery status. "Auxiliary value" may include new values calculated from raw meter data for additional information about utility usage. Auxiliary value may include, for example, present demand, an unbilled amount, a maximum demand, a today's usage, a load disconnect, and a unit price per kilowatt hour. A person skilled in the art will readily recognize that an auxiliary value may include a variety of new values. The type of raw meter data and auxiliary values included may vary with the type of utility being metered, for example, measurements of gas usage or water usage may differ from measurements of electricity usage. Further, non-smart meter 104a may include an analog-to-digital converter (ADC) 109. A person skilled in the art will readily recognize that ADC 109 may be a part of AFE 107 or may be a separate component. After AFE 107 collects raw meter data in analog format, ADC 109 may convert raw meter data to a digital format.

Referring again to FIG. 1, each non-smart meter 104a-c, using meter transmitter 108 (FIG. 2), may send first communication signal 111 containing raw meter data to meter data support system 105. Each non-smart meter 104a-c may be restricted to one-way outbound communication, i.e., from non-smart meter 104a-c to meter data support system 105. Including only AFE 107 (FIG. 2) and the restricted to one-way outbound communication capability in each non-smart meter 104a-c reduces the need to store, process, and calculate an auxiliary value based on raw meter data at each non-smart meter104a-c. This, in turn, may reduce the associated need for additional equipment at each non-smart meter 104a-c thereby reducing, for example, the cost, size, weight, electronic complexity, and power demand of each non-smart meter 104a-c. Meter data support system 105 may be configured to receive raw meter data from non-smart meters 104a-c. Transmission of first communication signal 111 includes one-way outbound communication from non-smart meter 104 to meter data support system 105. Each non-smart meter 104 may be equipped to measure utility usage as raw meter data and to transmit raw meter data only. Meter data support system 105 may receive raw meter data from a plurality of non-smart meters 104 where auxiliary value may be calculated from the raw meter data for transmission in second communication signal 113 to user 106. Transmission of first communication signal 111 and second communication signal 113 may include the following formats: power line carrier (PLC), radio frequency (RF), cellular transmission, and general packet radio service (GPRS). These formats are well known to a person skilled in the art.

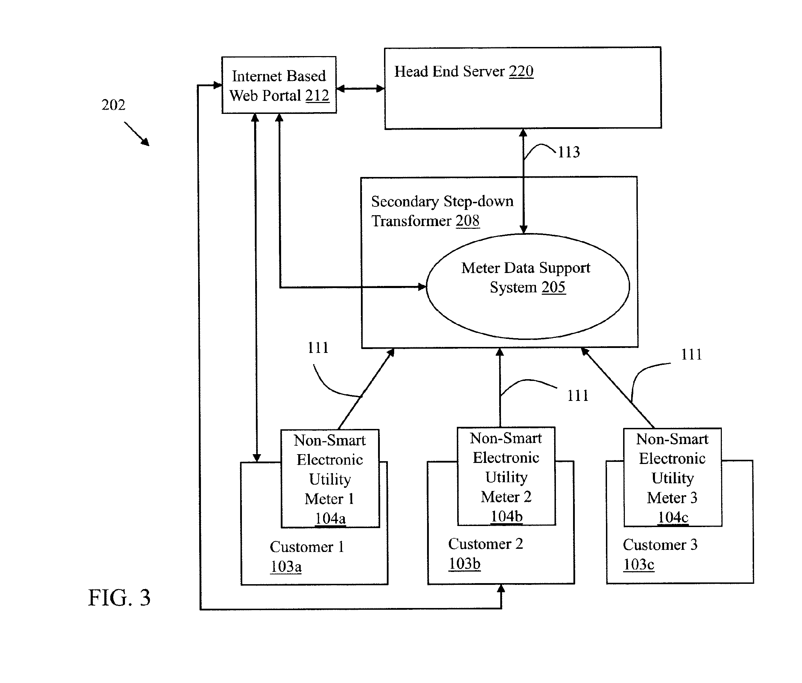

Referring to FIG. 3, block diagram of one embodiment of system 202 in accordance with the invention is shown. A secondary step down transformer 208 may receive electricity from primary phase distribution lines and reduce, i.e. "step down," the voltage for distribution to a group of residential and/or commercial customers. Secondary step down transformer 208 typically may serve a group of residential and/or commercial customers and, consequently, may provide the group of residential and/or commercial customers meter data management with system 202. Meter data support system 205 may be included with a secondary step down transformer 208. Secondary step down transformer 208 may provide power to meter data support system 205. Secondary step down transformer 208 may provide enclosure to meter data support system 205. Meter data support system 205 is a separate component from any smart device that may be included with secondary step down transformer 208. In one embodiment, a user 106 (FIG. 1) may take the form of a head end server 220 within the AMI of a distribution network. Head end server 220 may display auxiliary value and/or raw meter data on an Internet based web portal 212 where auxiliary value and/or raw meter data may be accessed by each customer 103a-c and/or head end server 220 (user 106 FIG. 1). In another embodiment, meter data support system 202 may display auxiliary value and/or raw meter data on an Internet based web portal 212 where auxiliary value and/or raw meter data may be accessed by each customer 103a-c and/or head end server 220 (user 106 FIG. 1).

Meter data support system 205 is a separate component from non-smart electronic utility meter 104a-c and a separate component from head end server 220. Implementation of meter data support system 205 may allow the continued use of existing non-smart electronic utility meters thereby reducing expense of replacement. Meter data support system 205 is a separate component from any smart device located within the electrical distribution network. As discussed, FIG. 3 shows meter data support system 205 included as part of secondary step-down transformer 208. However, meter data support system 205 may be included as part of any node or line in the electrical distribution network, except at head end server 220 or non-smart electronic utility meter 104a-c, including, for example the generating station, the generator step-up transformer, the high voltage transmission lines, the substation step-down transformers, the primary phase distribution lines, and the secondary phase distribution lines.

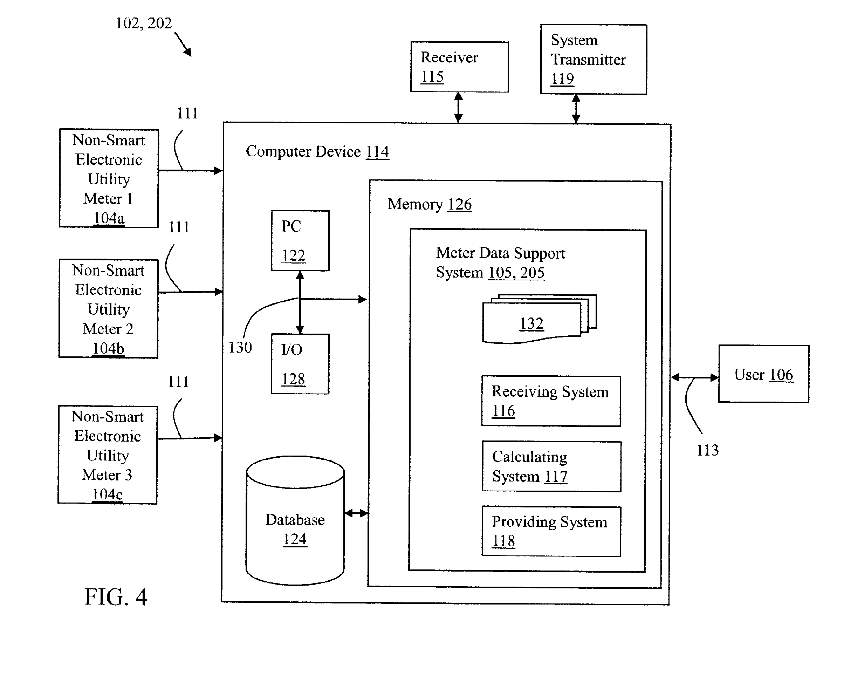

Referring to FIG. 4, a block diagram of one embodiment of system 102, 202 in accordance with the invention is shown. System 102, 202 may include a receiver 115, a system transmitter 119, and a computer device 114. Receiver 115 and system transmitter 119 may include any known or to be developed receiving and/or transmission device that may be configured to receive and/or transmit first communication signal 111 and/or second communication signal 113 in the following formats: power line carrier (PLC), radio frequency (RF), cellular transmission, and general packet radio service (GPRS). Computer device 114 may include meter data support system 105, 205 which makes computer device 114 operable to receive raw meter data, calculate an auxiliary value, and provide access to the auxiliary value. As indicated in FIG. 4, a receiving system 116, a calculating system 117, and a providing system 118 may be optional components (or, modules) in meter data support system 105, 205. Alternatively, receiving system 116, calculating system 117, and providing system 118 may be part of an external system which may perform the functions described herein.

Computer device 114 is shown in communication with user 106. User 106 may be a human, for example, a programmer or operator and/or a computerized system interacting with system 102, 202 and meter data support system 105, 205. Communications between user 106 and computer device 114 can be implemented using any solution, such as a graphical interface, an application programming interface (API), and/or the like. Furthermore, communications can utilize any combination of public and/or private networks. Additionally, computer device 114 is shown in communication with each customer 103a-c. Computer device 114 is shown including a processing component 122 (e.g., one or more processors), a database 124, a memory 126, an input/output (I/O) component 128 (e.g., one or more I/O interfaces and/or devices), and a communications pathway 130. In one embodiment, processing component 122 executes program code, such as meter data support system 105, 205, which is at least partially embodied in memory 126. While executing program code, processing component 122 can process data, which can result in reading and/or writing the data to/from database 124, memory 126 and/or I/O component 128 for further processing. Communications pathway 130 provides a communications link between each of the components in computer device 114. I/O component 128 can comprise one or more human I/O devices or storage devices, which enable user 106 and/or customer 103a-c to interact with computer device 114 and/or one or more communications devices to enable user 106 and/or customer 103a-c to communicate with computer device 114 using any type of communications link. To this extent, meter data support system 105, 205 can manage a set of interfaces (e.g., graphical user interface(s), application program interface, and/or the like) that enable human and/or system interaction with system 102, 202 and meter data support system 105, 205.

In any event, computer device 114 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, meter data support system 105, 205 can be embodied as any combination of system software and/or application software. In any event, the technical effect of computer device 114 is to receive raw meter data, calculate an auxiliary value, and provide access to the auxiliary value.

Further, meter data support system 105, 205 can be implemented using a set of modules 132. In this case, a module 132 can enable computer device 114 to perform a set of tasks used by meter data support system 105, 205, and can be separately developed and/or implemented apart from other portions of meter data support system 105, 205. Meter data support system 105, 205 may include modules 132 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computer device 114.

When computer device 114 comprises multiple computing devices, each computing device may have only a portion of meter data support system 105, 205 embodied thereon (e.g., one or more modules 132). However, it is understood that computer device 114 and meter data support system 105, 205 are only representative of various possible equivalent computer devices that may perform a process described herein. To this extent, in other embodiments, the functionality provided by computer device 114 and meter data support system 105, 205 can be at least partially implemented by one or more computing devices that include any combination of general and/or specific purpose hardware with or without program code. In each embodiment, the hardware and program code, if included, can be created using standard engineering and programming techniques, respectively.

Regardless, when computer device 114 includes multiple computing devices, the computing devices can communicate over any type of communications link. Further, while performing a process described herein, computer device 114 can communicate with one or more other computer devices using any type of communications link. In either case, the communications link can comprise any combination of various types of wired and/or wireless links; comprise any combination of one or more types of networks; and/or utilize any combination of various types of transmission techniques and protocols.

As discussed herein, meter data support system 105, 205 enables computer device 114 to receive raw meter data, calculate an auxiliary value, and provide access to the auxiliary value. Meter data support system 105, 205 may include logic, which may include the following functions: receiving system 116, calculating system 117, and providing system 118. In one embodiment, meter data support system 105, 205 may include logic to perform the below-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, meter data support system 105, 205 and logic included therein will be described herein as a specific use machine. As will be understood from the description, while logic is illustrated as including each of the above-stated functions, not all of the functions are necessary according to the teachings of the invention as recited in the appended claims.

In one embodiment, the invention provides a computer program embodied in at least one computer-readable storage medium, which when executed, enables a computer device (e.g., computer device 114) to receive raw meter data, calculate an auxiliary value, and provide access to the auxiliary value. To this extent, the computer-readable storage medium includes program code, such as meter data support system 105, 205, which implements some or all of a process described herein. It is understood that the term "computer-readable storage medium" comprises one or more of any type of tangible medium of expression capable of embodying a copy of the program code (e.g., a physical embodiment). For example, the computer-readable storage medium can comprise: one or more portable storage articles of manufacture; one or more memory/storage components of a computing device; paper; and/or the like. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

In another embodiment, the invention provides a method of providing a copy of program code, such as meter data support system 105, 205, which implements some or all of a process described herein. In this case, a computer device can generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer device receiving the set of data signals described herein, and translating the set of data signals into a copy of the computer program embodied in at least one computer-readable medium. In either case, the set of data signals can be transmitted/received using any type of communications link.

In still another embodiment, the invention provides a method of generating a system for receiving raw meter data, calculating an auxiliary value, and providing access to the auxiliary value. In this case, a computer device, such as computer device 114, can be obtained (e.g., created, maintained, made available, etc.) and one or more modules for performing a process described herein can be obtained (e.g., created, purchased, used, modified, etc.) and deployed to the computer device. To this extent, the deployment can comprise one or more of: (1) installing program code on a computing device from a computer-readable medium; (2) adding one or more computing and/or I/O devices to the computer device; and (3) incorporating and/or modifying the computer device to enable it to perform a process described herein.

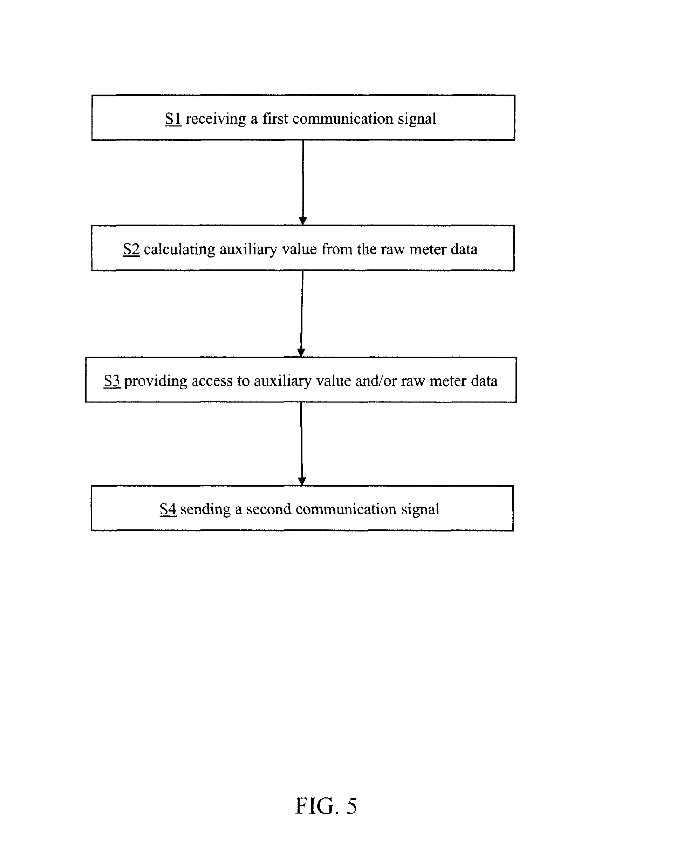

Referring to FIG. 5 (along with FIGS. 1-4), a flow diagram of a method in accordance with one embodiment of the invention is shown. As shown in FIG. 5, at S1, receiving system 116 may receive first communication signal 111 containing raw meter data from at least one non-smart meter 104a-c. Raw meter data may include kilowatt usage, time of day and meter identification. At S2, calculating system 117 may calculate auxiliary value based on the raw meter data.

In one embodiment, at S3, providing system 117 may provide access to auxiliary value by user 106 and/or customer 103a-c. Providing access may include assigning a uniform resource locator to auxiliary value for providing an address to display auxiliary value on an Internet based web portal 212 (FIG. 3). At S4, system transmitter 119 may send second communication signal 113 with auxiliary value to user 106 and/or customer 103a-c. Communication between user 106 and/or customer 103a-c and system 102 may be two-way communication. For example, user 106 and/or customer 103a-c may provide new instructions to meter data support system 105, 205 for calculating auxiliary value. In one embodiment, user 106 may display auxiliary value and/or raw meter data for each non-smart meter 104a-c on Internet based web portal 212. In one embodiment, system 102, 202 may display auxiliary value and/or raw meter data for each non-smart meter 104a-c on Internet based web portal 212. Each user 106 and/or customer 103a-c may access Internet based web portal 212 to view auxiliary value and/or meter data for the non-smart meter associated with customer 103a-c. Security for accessing Internet based web portal 212 may include any known or to be developed method for securing access to Internet based web portal 212.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (102, 202), comprising:
a meter data support system (105, 205) on a computer device (114) configured to:
receive raw meter data from a plurality of non-smart electronic utility meters (104a-c) that are each restricted to one way outbound communication,
calculate an auxiliary value for each non-smart electronic utility meter (104a-c) using the raw meter data from each respective non-smart electronic utility meter (104a-c), and
provide access to the auxiliary value to at least one of a user (106) and a customer (103a-c).

2. The system (102, 202) of claim 1, wherein each non-smart electronic utility meter (104a-c) is devoid of smart meter functioning with respect to calculating the auxiliary value.

3. The system (102, 202) of claim 1 or 2, wherein the meter data support system (105, 205) is located between the plurality of non-smart electronic utility meters (104a-c) and a head end server (220).

4. The system (102, 202) of claim 1 or 2, wherein the meter data support system (105, 205) is included with a secondary step-down transformer (208).

5. The system (102, 202) of any of claims 1 to 4, further comprising:
a receiver (115) and a transmitter (119), and
wherein the receiver (115) and transmitter (119) use one of the following formats: power line carrier (PLC), radio frequency (RF), cellular transmission, and general packet radio service (GPRS).

6. The system (102, 202) of any of claims 1 to 5, wherein the meter data support system (105, 205) is further configured to transmit at least one of the auxiliary value and the raw meter data to a head end server (220).

7. The system (102, 202) of any of claims 1 to 6, wherein the auxiliary value includes at least one of a present demand, an unbilled amount, a maximum demand, a today's usage, a load disconnect, and a unit price per kilowatt hour.

8. The system (102, 202) of any of claims 1 to 7, wherein the providing access to the auxiliary value includes assigning a uniform resource location (URL) for linking access to an Internet based web portal (212).

9. The system (102, 202) of claim 6, further comprising the head end server (220) providing for display via an Internet based web portal (212) at least one of the auxiliary value and the raw meter data.

10. The system of any preceding claim, further comprising:
a plurality of non-smart electronic utility meters (104a-c), wherein each non-smart electronic utility meter is devoid of smart meter functioning with respect to calculating the auxiliary value, and wherein each non-smart electronic utility meter is restricted to one way outbound communication.
